# FASCICULE DE BREVET EUROPEEN

(11) **EP 1 536 042 B1**
(45) Date de publication et mention de la délivrance du brevet: **16.08.2006**
(21) Numéro de dépôt: 04106056.7
(22) Date de dépôt: 25.11.2004
(51) Int. Cl.: C23C 30/00, C09D 5/24, B23K 28/00

(54) **Ensemble comprenant deux pièces métalliques protégées contre la formation d'un couple galvanique**
Anordnung aus zwei Metallstücken geschützt gegen die Bildung eines galvanischen Paares
Device comprising two metallic pieces protected against galvanic corrosion

(30) Priorité: 27.11.2003 FR 0350920
(43) Date de publication de la demande: 01.06.2005
(73) Titulaire: AIRBUS France, 31060 Toulouse (FR)
(72) Inventeur: Donnadieu, André, 31770, Colomiers (FR)
(74) Mandataire: Poulin, Gérard

(56) Documents cités:
- GB-A- 860 291
- GB-A- 951 231
- US-A- 4 234 653
- US-A- 4 824 713

## Description

### DOMAINE TECHNIQUE

La présente invention se rapporte de façon générale au domaine de la protection de pièces métalliques assemblées entre-elles et en contact, contre la formation d'un couple galvanique entre ces pièces métalliques réalisées dans des matériaux différents.

A titre indicatif, l'invention peut trouver des applications dans les systèmes de transport de fluides, notamment ceux présents à bord d'aéronefs et étant par exemple destinés à être traversés par un fluide hydraulique ou du carburant.

### ETAT DE LA TECHNIQUE ANTERIEURE

Quel que soit le domaine technique considéré, pour des raisons diverses et variées, il est parfois nécessaire d'avoir à assembler des pièces métalliques réalisées dans des matériaux différents.

Par exemple, lors de la réalisation d'un système de transport de fluides pour aéronef, certains éléments tels que les raccords de tubes de transport sont réalisés en acier notamment pour des raisons de tenue aux sollicitations environnantes, tandis que d'autres éléments tels que les tubes de transport sont réalisés dans un alliage d'aluminium afin que le système présente de bonnes propriétés de dissipation thermique et de conductivité électrique, ainsi qu'une masse globale relativement faible.

Or de façon connue, lorsque deux pièces métalliques réalisées dans des matériaux différents sont en contact l'une avec l'autre, il se crée un couple galvanique entre ces deux pièces, qui se matérialise par la formation d'un courant électrique engendré par la différence de potentiel entre les deux matériaux métalliques. Ainsi, lorsque les surfaces de contact de ces deux pièces métalliques ne sont pas protégées contre la formation du couple galvanique précité, ces surfaces en appui l'une sur l'autre subissent alors des effets néfastes comme celui de la corrosion galvanique.

En outre, il est parfois nécessaire d'obtenir une bonne conductivité électrique de la liaison située entre les deux pièces métalliques en contact. Toujours dans l'exemple illustratif du système de transport de fluides pour aéronef, cette bonne conductivité électrique est notamment recherchée pour assurer la sécurité des personnels, la protection du matériel contre les courts-circuits, la dissipation des charges électrostatiques liée au transport des fluides, et la mise à la masse des courants induits par des rayonnements électromagnétiques

Or il est indiqué que selon la nature des deux matériaux métalliques utilisés pour réaliser les surfaces de contact des pièces assemblées, la liaison entre ces surfaces peut présenter l'inconvénient de posséder des caractéristiques de conductivité électrique plus faibles que celles d'une pièce monolithique métallique.

Pour faire face aux différentes contraintes précitées, il a été proposé, dans l'art antérieur, de prévoir un revêtement protecteur sur l'une et/ou l'autre des surfaces de contact des pièces métalliques, afin d'éviter aux deux pièces de former un couple galvanique, et par conséquent d'interdire la corrosion galvanique de ces surfaces de contact.

Une solution connue pour obtenir ce revêtement protecteur consiste à déposer une couche de cadmium par électrochimie sur la/les surfaces de contact de pièces métalliques. De cette façon, lorsque les pièces assemblées sont par exemple respectivement en acier et dans un alliage d'aluminium, le cadmium permet d'assurer la protection de la pièce en acier contre la corrosion galvanique, tout en formant une liaison de bonne conductivité électrique entre les deux pièces.

Cependant, outre le fait que la mise en oeuvre de la technique de dépôt électrochimique du cadmium engendre des coûts de production non négligeables, l'inconvénient principal de cette solution de l'art antérieur provient directement du fait que le cadmium appartient à la famille des métaux lourds.

Or différentes réglementations récentes (directive 91/338/CEE, protocole signé par la Communauté Européenne à Aarhus le 24 juin 1998.) imposent aux industriels, de façon de plus en plus contraignante, de limiter l'utilisation de métaux lourds en raison des risques de pollution par rejet dans l'environnement.

De plus, selon les conditions de mise en oeuvre du métal lourd considéré, celui-ci peut parfois présenter des risques importants pour la santé des personnes travaillant sur les installations permettant cette mise en oeuvre du métal lourd. De l'art antérieur, on connaît également le document GB 951 231 A décrivant un perfectionnement aux revêtements résistants à l'érosion appliqués par pulvérisation à la flamme sur des métaux. Une application particulière de ce perfectionnement concerne le revêtement d'une pale d'hélice d'avion.

D'autre part, on connaît aussi le document GB 860 291 A décrivant un procédé pour revêtir un article par dépôt électrolytique. Globalement, il ressort de ce document que l'article à protéger contre l'érosion et la corrosion constitue une cathode dans un bain galvanoplastique, dans lequel sont prévues notamment, en suspension, des particules insolubles et inertes électriquement.

### EXPOSÉ DE L'INVENTION

L'invention a donc pour but de proposer un ensemble comprenant deux pièces métalliques assemblées entre-elles et réalisées dans des matériaux différents, au moins l'une des surfaces de contact des deux pièces étant pourvue d'un revêtement protecteur apte à interdire à ces pièces métalliques de former un couple galvanique, l'ensemble remédiant au moins partiellement aux inconvénients mentionnés ci-dessus relatifs aux réalisations de l'art antérieur.

En outre, l'invention a pour but de présenter un aéronef muni d'au moins un tel ensemble, ainsi qu'un procédé de fabrication de ce même ensemble.

Pour ce faire, les caractéristiques de la présente invention se trouvent dans les revendications attachées. L'invention a tout d'abord pour objet un ensemble comprenant une première et une seconde pièces métalliques assemblées entre-elles et réalisées dans des matériaux différents, les première et seconde pièces disposant respectivement d'une première surface de contact et d'une seconde surface de contact en appui l'une sur l'autre, au moins l'une des première et seconde surfaces de contact étant pourvue d'un revêtement protecteur apte à interdire aux première et seconde pièces métalliques de former conjointement un couple galvanique. Selon l'invention, au moins un revêtement protecteur comporte une couche de peinture chargée en particules conductrices d'électricité.

Avantageusement, la présence d'au moins une couche de peinture chargée en particules conductrices d'électricité entre les deux surfaces de contact des pièces permet d'éviter le couplage galvanique entre ces surfaces, dans la mesure où il n'existe plus de contact direct entre celles-ci. En conséquence, ces surfaces de contact sont donc protégées contre la corrosion galvanique.

De plus, les méthodes classiques utilisées pour déposer une couche de peinture, telle que la simple pulvérisation à l'aide d'un pistolet, sont largement moins complexes que celles employées pour le dépôt électrochimique du cadmium, ce qui se traduit directement par une diminution des coûts de production de l'ensemble selon l'invention.

D'autre part, la/les couches de peinture chargées en particules conductrices d'électricité autorisent de manière avantageuse la conduction électrique entre les deux pièces métalliques de l'ensemble, ce qui permet d'assurer la sécurité des personnels, la protection du matériel contre les courts-circuits, la dissipation des charges électrostatiques liée au transport des fluides, et la mise à la masse des courants induits par des rayonnements électromagnétiques.

Bien entendu, la composition des couches de peinture chargées en particules conductrices d'électricité est déterminée de façon à ce que ces couches ne forment que des couples galvaniques extrêmement faibles en association avec les surfaces de contact des pièces métalliques de l'ensemble avec lesquelles elles sont directement en contact. En d'autres termes, la composition des couches de peinture chargées en particules conductrices d'électricité est déterminée de sorte que les couples galvaniques formés par les couches de peinture et les surfaces de contact des pièces métalliques sont d'une part largement réduits par rapport au couple galvanique susceptible d'être formé conjointement par ces deux mêmes pièces métalliques, et d'autre part suffisamment faibles pour ne pas engendrer de corrosion sensible des pièces métalliques considérées.

Pour ce faire, à titre d'exemple, il est possible de prévoir que les couches de peinture chargées en particules conductrices d'électricité disposent d'une composition identique ou similaire à celle des peintures de revêtement utilisées en compatibilité électromagnétique (CEM), afin d'assurer les blindages électromagnétiques, par exemple dans le cas de coffrets électriques ou électroniques.

Ces peintures de revêtement utilisées en compatibilité électromagnétique comportent généralement un liant (acrylique, époxy, uréthane) et une charge conductrice du type métal ou graphite (nickel, argent, cuivre. A ce titre, une peinture souvent utilisée dans ce domaine de compatibilité électromagnétique, et tout à fait adaptée pour l'ensemble selon l'invention, est de type acrylique-nickel.

Toujours de façon indicative, pour chaque couche de peinture chargée en particules conductrices d'électricité, les particules peuvent être carbonées et/ou métalliques.

De préférence, chaque revêtement protecteur prévu sur l'ensemble est exclusivement constitué d'une couche de peinture chargée en particules conductrices d'électricité. Par conséquent, même si une couche de peinture peut être obtenue en appliquant successivement diverses sous-couches, de compositions identiques ou différentes, la réalisation de cette couche est donc particulièrement simple et rapide à effectuer, notamment par rapport à la technique de dépôt électrochimique.

L'invention a également pour objet un aéronef comprenant au moins un ensemble tel que celui décrit ci-dessous. Ainsi, dans un tel cas, l'ensemble peut alors faire partie intégrante d'un système de transport de fluide, par exemple destiné à être traversé par un fluide hydraulique ou du carburant, ou encore prendre la forme d'un assemblage quelconque entre deux pièces métalliques de l'aéronef réalisées dans des matériaux différents, comme un assemblage constitué par une ferrure en acier montée sur une structure en alliage d'aluminium.

Enfin, l'ensemble peut comprendre un nombre de pièces métalliques en contact supérieur à deux. Dans un tel cas, on peut alors prévoir que chaque couple de pièces métalliques en contact est protégé contre la formation d'un couple galvanique entre les deux pièces de ce couple, de la manière décrite ci-dessus en prévoyant au moins une couche de peinture chargée en particules conductrices d'électricité.

Par ailleurs, l'objet de la présente invention se rapporte également à un procédé de fabrication d'un ensemble comprenant une première et seconde pièces métalliques assemblées entre-elles et réalisées dans des matériaux différents, les première et seconde pièces disposant respectivement d'une première surface de contact et d'une seconde surface de contact en appui l'une sur l'autre, le procédé comprenant une étape de protection des pièces métalliques consistant à former un revêtement protecteur sur au moins l'une des première et seconde surfaces de contact, chaque revêtement protecteur étant apte à interdire aux première et seconde pièces métalliques de former conjointement un couple galvanique. Selon l'invention, au moins un revêtement protecteur est formé de manière à comporter une couche de peinture chargée en particules conductrices d' électricité.

Enfin, un objet de la présente invention se rapporte à l'utilisation d'une peinture chargée en particules conductrices d'électricité pour former un revêtement protecteur apte à interdire la formation d'un couple galvanique entre une première et une seconde pièces métalliques en contact et assemblées entre-elles, et étant réalisées dans des matériaux différents.

D'autres avantages et caractéristiques de l'invention apparaîtront dans la description détaillée ci-dessous.

### BRÈVE DESCRIPTION DES DESSINS

Cette description sera faite au regard des dessins annexés parmi lesquels ;
- la figure 1 représente une vue schématique en coupe d'un ensemble selon un premier mode de réalisation préféré de la présente invention ; et
- la figure 2 représente une vue schématique en coupe d'un ensemble selon un second mode de réalisation préféré de la présente invention.

### EXPOSÉ DÉTAILLÉ DE MODES DE RÉALISATION PRÉFÉRÉS

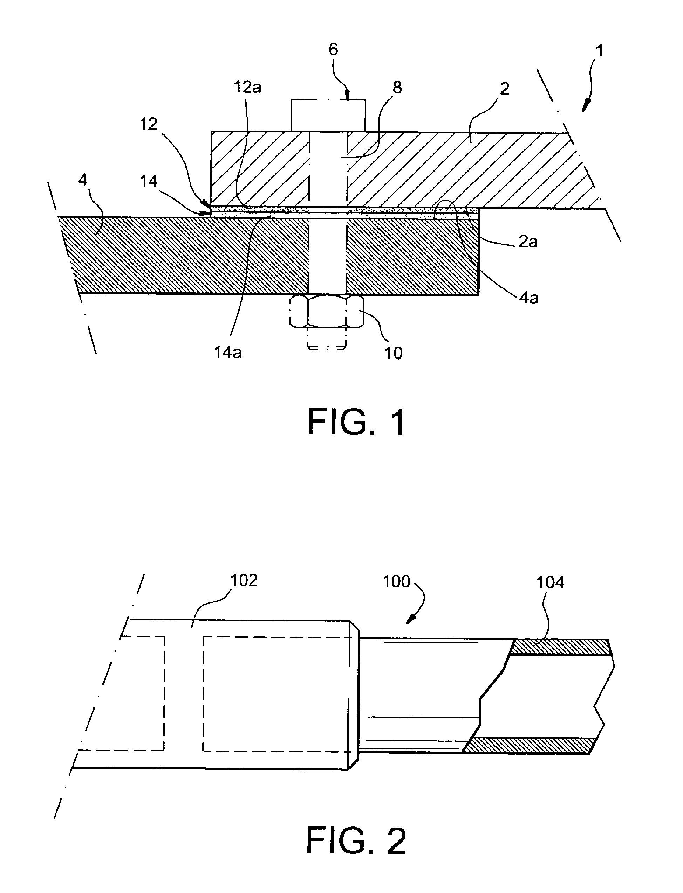

En référence à la figure 1, on voit un ensemble 1 selon un premier mode de réalisation préféré de la présente invention.

L'ensemble 1 comporte une première et une seconde pièces métalliques 2 et 4 assemblées entre elles à l'aide de moyens d'assemblage 6 pouvant par exemple être constitués d'une vis 8 et d'un écrou 10. Ces pièces 2 et 4 sont réalisées dans des matériaux différents tels que les aciers et les alliages d'aluminium, et prennent de préférence la forme de deux tôles en contact, assemblées de façon à être sensiblement parallèles entre-elles.

Dans le but d'autoriser l'assemblage des pièces métalliques 2 et 4, la première pièce métallique 2 dispose d'une première surface de contact 2a en appui sur une seconde surface de contact 4a appartenant à la seconde pièce métallique 4, les surfaces 2a et 4a étant de préférence des surfaces planes.

Dans ce premier mode de réalisation préféré de la présente invention, les deux surfaces de contact 2a et 4a sont chacune munie d'un revêtement protecteur 12,14 apte à interdire aux pièces métalliques 2 et 4 de former ensemble un couple galvanique, du fait de l'interposition des ces deux revêtements 12 et 14 entre les deux surfaces de contact 2a et 4a. De cette façon, comme on peut l'apercevoir clairement sur la figure 1, il est à comprendre que ceux sont les revêtements protecteurs 12 et 14 qui sont directement en contact l'un avec l'autre, et non les surfaces de contact 2a et 4a qui les supportent, celles-ci restant tout de même considérées comme étant en appui l'une sur l'autre. A cet égard, il est indiqué que pour des raisons de clarté, les revêtements 12 et 14 ont été volontairement représentés en surépaisseur sur la figure 1.

Toujours dans ce premier mode de réalisation préféré, chacun des deux revêtements protecteurs 12 et 14 est exclusivement constitué d'une couche de peinture chargée en particules conductrices d'électricité 12a et 14a, les particules utilisées pouvant par exemple être des particules carbonées du type graphite ou charbon, et/ou des particules métalliques du type nickel. A titre d'exemple indicatif, chaque couche de peinture 12a,14a dispose d'une épaisseur n'excédant pas 150 micromètres.

Bien qu'il ait été décrit un ensemble 1 comportant deux pièces 2 et 4 disposant chacune d'une couche de peinture chargée en particules conductrices d'électricité 12a et 14a, il est bien évident que cet ensemble 1 pourrait n'en comprendre qu'une seule, appliquée sur l'une ou l'autre des surfaces de contact 12a et 14a, toujours de manière à interdire aux deux pièces métalliques 2 et 4 de former un couple galvanique.

A ce titre, dans un premier exemple illustratif, la première pièce 2 est réalisée en acier au carbone (acier carboné), et la seconde pièce 4 est réalisée dans un alliage d'aluminium. Dans un tel cas, seule la première surface de contact 2a de la pièce 2 peut être revêtue d'une couche de peinture chargée en particules conductrices d'électricité, surtout lorsque la seconde surface de contact 4a de la seconde pièce 4 est déjà protégée par un revêtement électriquement conducteur tel que de l'alodine. En outre, si la seconde surface de contact 4a n'est pas déjà protégée par un revêtement électriquement conducteur, elle peut alors elle aussi être munie d'une couche de peinture chargée en particules conductrices d'électricité, comme cela est représenté sur la figure 1.

Dans un second exemple illustratif, la première pièce 2 est réalisée en acier inoxydable dont la résistance de sa surface de contact 2a à la corrosion galvanique est suffisante même lorsqu'elle n'est pas protégée par un revêtement de protection, et la seconde pièce 4 est réalisée dans un alliage d'aluminium. Dans le cas où la seconde surface de contact 4a de la seconde pièce 4 n'est pas déjà protégée par un revêtement électriquement conducteur tel que de l'alodine, seule cette seconde surface de contact 4a peut être revêtue d'une couche de peinture chargée en particules conductrices d'électricité. De plus, lorsque la seconde surface de contact 4a de la seconde pièce 4 est effectivement déjà protégée par un revêtement électriquement conducteur, la seule couche de peinture prévue peut alors être appliquée sur l'une ou l'autre des deux surfaces de contact 12a et 14a, par exemple en fonction de la facilité d'application. Ici encore, il serait néanmoins possible de prévoir que les deux surfaces de contact 12a et 14a soient chacune munie d'un revêtement protecteur, comme l'illustre la figure 1.

Dans ces deux exemples illustratifs, l'utilisation de particules telles que des particules carbonées du type graphite ou charbon, et/ou des particules métalliques du type nickel, convient tout à fait pour que les couples galvaniques formés par les couches de peinture 12a,14a et les surfaces de contact 2a,4a des pièces métalliques 2,4 soient d'une part largement réduits par rapport au couple galvanique susceptible d'être formé conjointement par ces deux mêmes pièces métalliques, et d'autre part suffisamment faibles pour ne pas engendrer de corrosion sensible des pièces métalliques considérées.

En référence à la figure 2, on voit un ensemble 100 selon un second mode de réalisation préféré de la présente invention, et faisant partie intégrante d'un système de transport de fluide pour aéronef, par exemple destiné à être traversé par un fluide hydraulique ou du carburant.

L'ensemble 100 comporte une première et une seconde pièces métalliques 102 et 104 assemblées entre-elles et étant réalisées dans des matériaux différents tels que les aciers et les alliages d'aluminium.

Dans ce second mode de réalisation préféré de la présente invention, la première pièce 102 en acier est un raccord de tubes de transport de fluides, et la seconde pièce 104 en alliage d'aluminium est un tube de transport de fluides. Les deux pièces métalliques 102 et 104 sont donc en contact et assemblées entre-elles de façon classique.

De la même manière que précédemment, le raccord 102 et le tube 104 présentent chacun une surface de contact (non représentée), de préférence sensiblement cylindrique, dont l'une et/ou l'autre est munie d'un revêtement protecteur tel que celui décrit dans le premier mode de réalisation préféré de la présente invention. Par conséquent, la/les couches de peinture chargées en particules conductrices d'électricité prévues sur la/les surfaces de contact des pièces 102 et 104 disposeraient alors également d'une forme sensiblement cylindrique.

Naturellement, sans sortir du cadre de l'invention, l'ensemble 100 pourrait également être défini comme comprenant un nombre supérieur de pièces métalliques en contact appartenant au système de transport de fluides. A titre d'exemple indicatif, l'ensemble 100 pourrait être défini comme comprenant un tube de transport de fluides complémentaire rattaché au raccord 102 et communiquant avec le tube 104 décrit précédemment, l'assemblage entre le raccord 102 et ce tube complémentaire (non représenté) étant alors identique ou similaire à celui du même raccord 102 et du tube représenté sur la figure 2 et décrit ci-dessus.

A cet égard, il est précisé que les pièces métalliques en contact et assemblées entre-elles de l'ensemble 100 peuvent prendre la forme de raccords de tubes ou de tubes de transport de fluide comme cela vient d'être présenté, mais peuvent également prendre la forme de tout autre composant du système de transport de fluide.

Il peut par exemple s'agir d'un raccordement d'un tube avec un échangeur de chaleur, ou d'un assemblage d'un tube et d'un support de celui-ci sur la structure de l'aéronef, ou encore de tout autre assemblage disposant d'au moins une pièce en aluminium en contact avec une autre pièce en acier au carbone ou en acier inoxydable.

## Revendications

1. Ensemble (1,100) comprenant une première (2,102) et une seconde pièces métalliques (4,104) assemblées entre-elles et réalisées dans des matériaux différents, les première et seconde pièces (2,4,102,104) disposant respectivement d'une première surface de contact (2a) et d'une seconde surface de contact (4a) en appui l'une sur l'autre, au moins l'une desdites première et seconde surfaces de contact (2a,4a) étant pourvue d'un revêtement protecteur (12,14) apte à interdire auxdites première et seconde pièces métalliques (2,4,102,104) de former conjointement un couple galvanique, **caractérisé en ce qu'**au moins un revêtement protecteur (12,14) comporte une couche de peinture (12a,14a) chargée en particules conductrices d'électricité.

2. Ensemble (1,100) selon la revendication 1, **caractérisé en ce que** chaque revêtement protecteur (12,14) est exclusivement constitué d'une couche de peinture (12a,14a) chargée en particules conductrices d'électricité.

3. Ensemble (1,100) selon la revendication 1 ou la revendication 2, **caractérisé en ce que** la première pièce métallique (2,102) est réalisée en acier carboné et la seconde pièce métallique (4,104) en alliage d'aluminium, et **en ce que** seule la première surface de contact (2a) est pourvue d'un revêtement protecteur.

4. Ensemble (1,100) selon la revendication 1 ou la revendication 2, **caractérisé en ce que** la première pièce métallique (2,102) est réalisée en acier inoxydable et la seconde pièce métallique (4,104) en alliage d'aluminium, et **en ce que** seule la seconde surface de contact (4a) est pourvue d'un revêtement protecteur.

5. Ensemble (1,100) selon l'une quelconque des revendications précédentes, **caractérisé en ce que** pour chaque couche de peinture (12a,14a) chargée en particules conductrices d'électricité, lesdites particules sont carbonées et/ou métalliques.

6. Ensemble (100) selon l'une quelconque des revendications précédentes, **caractérisé en ce que** ladite première pièce (102) est un raccord de tubes de transport de fluide, et **en ce que** ladite seconde pièce (104) est un tube de transport de fluide.

7. Ensemble (1,100) selon l'une quelconque des revendications précédentes, **caractérisé en ce qu'**il comprend un nombre de pièces métalliques en contact supérieur à deux.

8. Aéronef comprenant au moins un ensemble (1,100) selon l'une quelconque des revendications précédentes.

9. Procédé de fabrication d'un ensemble (1,100) comprenant une première (2,102) et seconde pièces métalliques (4,104) assemblées entre-elles et réalisées dans des matériaux différents, les première et seconde pièces (2,4,102,104) disposant respectivement d'une première surface de contact (2a) et d'une seconde surface de contact (4a) en appui l'une sur l'autre, ledit procédé comprenant une étape de protection desdites pièces métalliques (2,4,102,104) consistant à former un revêtement protecteur (12,14) sur au moins l'une desdites première et seconde surfaces de contact (2a,4a), chaque revêtement protecteur (12,14) étant apte à interdire auxdites première et seconde pièces métalliques (2,4,102,104) de former conjointement un couple galvanique, **caractérisé en ce qu'**au moins un revêtement protecteur (12,14) est formé de manière à comporter une couche de peinture (12a,14a) chargée en particules conductrices d'électricité.

10. Utilisation d'une peinture chargée en particules conductrices d'électricité pour former un revêtement protecteur (12,14) apte à interdire la formation d'un couple galvanique entre une première (2,102) et une seconde pièces métalliques (4,104) en contact et assemblées entre-elles, et étant réalisées dans des matériaux différents.

## Claims

1. Assembly (1,100) comprising a first metallic part (2,102) and a second metallic part (4,104) assembled together and made from different materials, the first and second parts (2,4,102,104) being provided with a first contact surface (2a) and a second contact surface (4a) respectively, in contact with each other, at least one of said first and second contact surfaces (2a,4a) being provided with a protective coating (12,14) capable of preventing said first and second metallic parts (2,4,102,104) from forming a galvanic couple, **characterised in that** at least one protective coating (12,14) comprises a paint coat (12a,14a) containing a filler of particles conducting electricity.

2. Assembly (1,100) according to claim 1, **characterised in that** each protective coating (12,14) is composed exclusively of one coat of paint (12a,14a) containing a filler of particles conducting electricity.

3. Assembly (1,100) according to claim 1 or claim 2, **characterised in that** the first metallic part (2,102) is made from carbon steel and the second metallic part (4,104) is made from an aluminium alloy, and **in that** only the first contact surface (2a) is coated with a protective coating.

4. Assembly (1,100) according to claim 1 or claim 2, **characterised in that** the first metallic part (2,102) is made from stainless steel and the second metallic part (4,104) is made from an aluminium alloy, and **in that** only the second contact surface (4a) is coated with a protective coating.

5. Assembly (1,100) according to any one of the previous claims, **characterised in that** for each coat of paint (12a,14a) containing a filler of particles conducting electricity, said particles are carbon and/or metal particles.

6. Assembly (100) according to any one of the previous claims, **characterised in that** said first part (102) is a fluid conveyance tube fitting, and **in that** said second part (104) is a fluid conveyance tube.

7. Assembly (1,100) according to any one of the previous claims, **characterised in that** it comprises more than two metallic parts in contact.

8. Aircraft comprising at least one assembly (1,100) according to any one of the previous claims.

9. Method for manufacturing an assembly (1,100) comprising a first metallic part (2,102) and a second metallic part (4,104) assembled together and made from different materials, the first and second parts (2,4,102,104) being provided with a first contact surface (2a) and a second contact surface (4a) bearing on each other, said method comprising a step to protect said metallic parts (2,4,102,104) consisting of forming a protective coating (12,14) on at least the first or the second contact surface (2a,4a), each protective coating (12,14) being capable of preventing the first and second metallic parts (2,4,102,104) from cooperating to form a galvanic couple, **characterised in that** at least one protective coating (12,14) is formed so as to include a coat of paint (12a,14a) containing a filler of particles conducting electricity.

10. Use of a paint containing a filler of particles conducting electricity to form a protective coating (12,14) capable of preventing a first metallic part (2,102) and a second metallic part (4,104) from forming a galvanic couple, these parts being in contact and assembled together, and being made from different materials.

## Patentansprüche

1. Anordnung (1,100) mit einem ersten (2,102) und einem zweiten (4,104) Metallteil, die miteinander verbunden und aus verschiedenen Materialien hergestellt sind, wobei das erste und zweite Teil (2,4,102,104) jeweils über eine erste Kontaktfläche (2a) und eine zweite Kontaktfläche (4a) verfügen, die aneinanderliegen, und mindestens eine der ersten oder zweiten Kontaktflächen (2a,4a) mit einer Schutzverkleidung (12,14) versehen ist, die verhindert, dass die ersten und zweiten Metallteile (2,4,102,104) zusammen ein galvanisches Element bilden, **dadurch gekennzeichnet, dass** mindestens eine Schutzverkleidung (12,14) eine Anstrichschicht (12a,14a) umfasst, die mit elektrisch leitenden Teilchen beladen ist.

2. Anordnung (1,100) nach Anspruch 1, **dadurch gekennzeichnet, dass** jede Schutzverkleidung (12,14) ausschließlich aus einer Anstrichschicht (12a,14a) gebildet ist, die mit elektrisch leitenden Teilchen beladen ist.

3. Anordnung (1,100) nach Anspruch 1 oder 2, **dadurch gekennzeichnet, dass** das erste Metallteil (2,102) aus Kohlenstoffstahl und das zweite Metallteil (4,104) aus Aluminiumlegierung hergestellt ist, und dass nur die erste Kontaktfläche (2a) mit einer Schutzverkleidung versehen ist.

4. Anordnung (1,100) nach Anspruch 1 oder 2, **dadurch gekennzeichnet, dass** das erste Metallteil (2,102) aus Edelstahl und das zweite Metallteil (4,104) aus Aluminiumlegierung hergestellt ist, und dass nur die zweite Kontaktfläche (4a) mit einer Schutzverkleidung versehen ist.

5. Anordnung (1,100) nach einem der vorangehenden Ansprüche, **dadurch gekennzeichnet, dass** bei jeder mit elektrisch leitenden Teilchen beladene Anstrichschicht (12a,14a) die Teilchen Kohlenstoffteilchen und/oder Metallteilchen sind.

6. Anordnung (100) nach einem der vorangehenden Ansprüche, **dadurch gekennzeichnet, dass** das erste Teil (102) ein Anschlussstück bzw. eine Muffe von Rohren zum Transport von Fluid ist, und das zweite Teil (104) ein Rohr zum Transport von Fluid ist.

7. Anordnung (1,100) nach einem der vorangehenden Ansprüche, **dadurch gekennzeichnet, dass** sie eine Zahl in Kontakt befindlicher Kontaktteile von über zwei umfasst.

8. Luftfahrzeug mit mindestens einer Anordnung (1,100) gemäß einem der vorangehenden Ansprüche.

9. Verfahren zur Herstellung einer Anordnung (1,100) mit einem ersten (2,102) und einem zweiten (4,104) Metallteil, die zusammengebaut und aus verschiedenen Materialien hergestellt sind, wobei das erste und zweite Teil (2,4,102,104) jeweils über eine erste Kontaktfläche (2a) und eine zweite Kontaktfläche (4a) verfügen, die aneinander anliegen, und das Verfahren einen Schritt zum Schutz der Metallteile (2,4,102,104) umfasst, der darin besteht, einen Schutzverkleidung (12,14) auf mindestens einer der ersten und zweiten Kontaktflächen(2a,4a) zu bilden, wobei jede Schutzverkleidung (12,14) in der Lage ist, zu verhindern, dass das erste und zweite Metallteil (2,4,102,104) zusammen ein galvanisches Element bilden, **dadurch gekennzeichnet, dass** mindestens eine Schutzverkleidung (12,14) derart gebildet wird, dass sie eine Anstrichschicht (12a,14a) umfasst, die mit elektrisch leitenden Teilchen beladen ist.

10. Verwendung eines mit elektrischen Teilchen beladenen Anstrichs zur Bildung einer Schutzverkleidung (12,14), die die Entstehung eines galvanischen Elements zwischen einem ersten (2,102) und einem zweiten(4,104) Metallteil verhindern kann, die in Kontakt stehen und zusammengebaut sind, und die aus unterschiedlichen Materialien hergestellt sind.
